# EUROPEAN PATENT SPECIFICATION

(11) **EP 4 085 186 B1**
(45) Date of publication and mention of the grant of the patent: **06.05.2026**
(21) Application number: 19958694.2
(22) Date of filing: 31.12.2019
(51) Int. Cl.: F02B 1/00, F02B 1/04, F02B 33/44, F02B 37/16, F02B 41/00, F02D 41/00, F02D 41/06, F02D 41/14, F02D 41/34, F02M 35/10

(54) **METHOD AND APPARATUS FOR ENGINE STARTUP**
VERFAHREN UND VORRICHTUNG FÜR MOTORSTART
PROCÉDÉ ET DISPOSITIF DE DÉMARRAGE DE MOTEUR

(43) Date of publication of application: 09.11.2022
(73) Proprietor: Cummins, Inc., Columbus, Indiana 47201 (US)
(72) Inventor: LEWIS, JR., Rick Vaughan, Franklin, Indiana 46131 (US); LIU, Yilun, Columbus, Indiana 47201 (US); LIU, Jingxuan, Columbus, Indiana 47201 (US); SINGH, Trideep, Bhilai, 490023 (IN); LANA, Carlos Alcides, Columbus, Indiana 47201 (US); COX, Stephen R., Indianapolis, Indiana 46239 (US)
(74) Representative: Cleveland Scott York
(86) International application number: PCT/US2019/069036
(87) International publication number: WO 2021/137853

(56) References cited:
- EP-A1- 3 530 918
- US-A1- 2012 204 570
- US-A1- 2019 257 242
- US-A1- 2019 331 020
- US-B2- 10 415 599
- US-B2- 8 340 885
- US-B2- 9 022 007
- US-B2- 9 328 702

## Description

### BACKGROUND

Fumigation type internal combustion engines receive a pressurized air-fuel mixture at the combustion chambers of the cylinders for engine operation. This arrangement creates a delay in engine starting during cranking of the engine since the air fuel mixture must travel from the mixer to a compressor for compression, then through a charge air cooler, and then through an intake throttle, in order to reach the intake manifold for distribution to the cylinders. As a result, starting of the engine requires a longer duration and more cranking than, for example, a direct injection engine.

Certain applications for fumigation type engines employing compressed air-fuel mixtures benefit from faster start times, such as engines for generators. In addition, many fumigation type engines employ larger batteries, electric compressors, high-speed starters, compressors, and/or other components to reduce engine start times. US 2019/331020 A1 discloses a related-art engine for a generator, comprising means to reduce engine start times. However, further technological developments are desirable in this area.

### SUMMARY

Unique systems, methods and apparatuses are disclosed for providing reduced engine startup times for a fumigation type internal combustion engine. A bypass flow path is provided that bypasses a compressor flow path, and directly connects the air-fuel mixer upstream of the compressor to the intake manifold, providing the air-fuel mixture directly to the intake manifold during engine startup. A valve is provided in the bypass flow path to open and close the bypass flow path. The need for electric compressors, high-speed starters, larger batteries, and other such components for faster engine startup may be eliminated.

This summary is provided to introduce a selection of concepts that are further described below in the illustrative embodiments. This summary is not intended to identify key or essential features of the claimed subject matter, nor is it intended to be used as an aid in limiting the scope of the claimed subject matter. Further embodiments, forms, objects, features, advantages, aspects, and benefits shall become apparent from the following description and drawings.

### BRIEF DESCRIPTION OF THE DRAWINGS

Fig. 1 is a schematic diagram of an internal combustion engine system including an intake system with a compressor flow path with an intake throttle and a charge air cooler, and a compressor bypass flow path for engine startup.
Fig. 2A is a cross-sectional view of one embodiment of a compressor bypass flow path, and Figs. 2B and 2C are graphs showing selections of compressor bypass length and diameter.
Fig. 3 is a flow diagram for an engine startup procedure utilizing a compressor bypass flow path.
Fig. 4 is a graphical illustration of the procedure of Fig. 3.
Fig. 5 is a graphical illustration of other embodiments of engine startup procedures utilizing a compressor bypass flow path.

### DESCRIPTION OF ILLUSTRATIVE EMBODIMENTS

For the purposes of promoting an understanding of the principles of the invention, reference will now be made to the embodiments illustrated in the drawings and specific language will be used to describe the same.

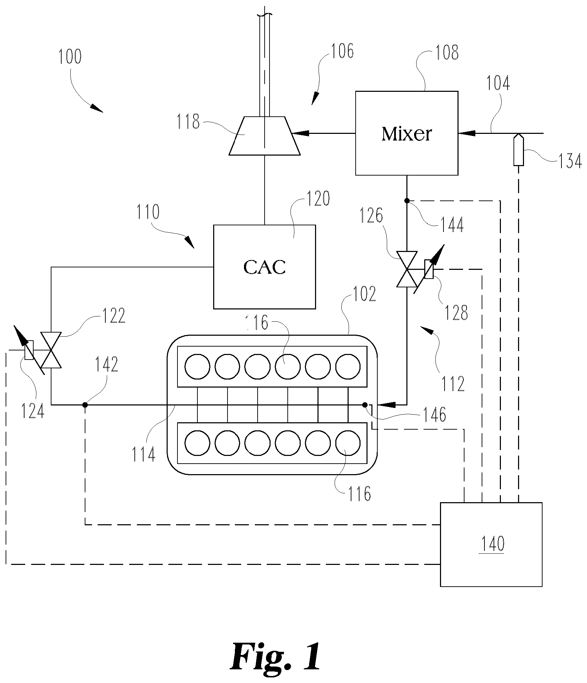

Referencing Fig. 1, an internal combustion engine system 100 for controlling a flow of an air-fuel mixture 104 is schematically depicted. The system 100 includes an internal combustion engine 102 which may be a fumigation type of engine, such as a natural gas operated spark-ignited engine. However, the present disclosure may have application with any type of engine in which fuel is injected upstream of the intake manifold and more rapid engine startup is desired.

The engine 102 includes an intake system 106 that includes a first, compressor flow path 110 and a second, compressor bypass flow path 112. As discussed further below, the compressor bypass flow path 112 is employed for engine startup, while the compressor flow path 110 is employed during other engine operating conditions after engine startup.

Each of the flow paths 110, 112 connects a mixer 108 that mixes the air-fuel mixture 104 to an intake manifold 114. Intake manifold 114 distributes the air-fuel mixture 104 to a plurality of cylinders 116 to initiate engine startup and for subsequent combustion during engine operations. In the illustrated embodiment, twelve cylinders 116 are provided with six cylinders in each of two cylinder banks. However, any number of cylinders 116 and cylinder arrangements in one or more cylinder banks is contemplated.

The compressor flow path 110 includes a compressor 118, a charge air cooler (CAC) 120, and an intake throttle (IAT) 122 between mixer 108 and intake manifold 114. The compressor 118 operates via energy from a motor or a turbine to compress the air-fuel mixture 104 upstream of intake manifold 114. The compressed air-fuel mixture 104 is sometimes called charge air, charge gases, charge flow, intake air, or other terms, none of which are limiting.

The compressed air-fuel mixture 104 may pass through charge air cooler 120 before being received by the engine 102. The charge air cooler 120 helps provide for increased air density for the compressed air-fuel mixture 104 in the engine 102, although the cooling reduces the pressure of the compressed air-fuel mixture 104. The charge air cooler 120 may be provided as shown, or arranged to provide after-cooling, two stage after-cooling, or any other charge air cooler arrangement. The presence and operations of a charge air cooler, if present, are well understood and not important to the operations of the compressor bypass for engine startup.

The compressor flow path 110 includes the intake throttle 122 for controlling the flow of the compressed air-fuel mixture 104 to the intake manifold 114 of engine 102. Intake throttle 122 can include a throttle actuator 124 connected to a controller 140 that controls an opening and closing of intake throttle 122 to provide a desired flow amount of the compressed air-fuel mixture 104 to the intake manifold 114 of engine 102.

The compressor bypass flow path 112 includes a bypass valve 126 for controlling the flow of the un-compressed air-fuel mixture 104 to the intake manifold 114 of engine 102 in a manner that bypasses the compressor 118. Bypass valve 126 can include a valve actuator 128 connected to controller 140 that controls an opening and closing of bypass valve 126 to provide a desired flow amount of the un-compressed, non-cooled air-fuel mixture 104 to the intake manifold 114 of engine 102 during engine startup.

Certain features such as shut-off valves, a turbine, multiple turbochargers and/or multiple compressors, an exhaust gas recirculation system, aftertreatment components, intake air filter, intake air components., etc. may be present or not in system 100. The presence and operations of such features is not limiting and not all possible features of system 100 are depicted to enhance the clarity of the description.

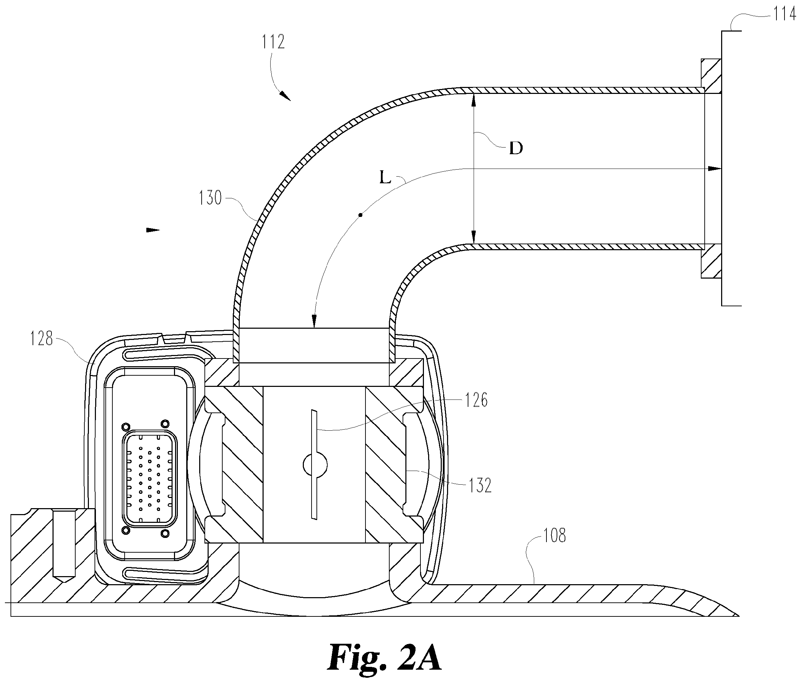

Referring to Fig. 2A, there is shown a cross-section of one embodiment of compressor bypass flow path 112. The illustrated embodiment includes a conduit 130 that forms a bend connecting the mixer 108 to the intake manifold 114. The conduit 130 forms a 90 degree bend in the illustrated embodiment, and is connected to a flanged housing 132 of bypass valve 126. The flanged housing 132 is connected directly to mixer 108 on the side opposite to conduit 130, such that, according to the invention, the bypass valve 126 is directly connected to the mixer 108.

It is contemplated that the overall length L of conduit 130 is as small as possible to minimize the transport time of the air-fuel mixture 104 to the nearest cylinders 116 connected to intake manifold 114. In certain specific embodiments, the length L ranges from 400 mm to 1000 mm. Other lengths, however, are not precluded in other embodiments. The cross-sectional dimension D of conduit 130 is also contemplated to be large enough to provide the desire mass flow of the air-fuel mixture 104 to achieve rapid engine startup. In certain embodiments, dimension D is a diameter of at least 60 mm. In the illustrated embodiment, the conduit 130 forms a bend of 90 degrees, but bends at other angles, including conduits 130 with no bend, are contemplated.

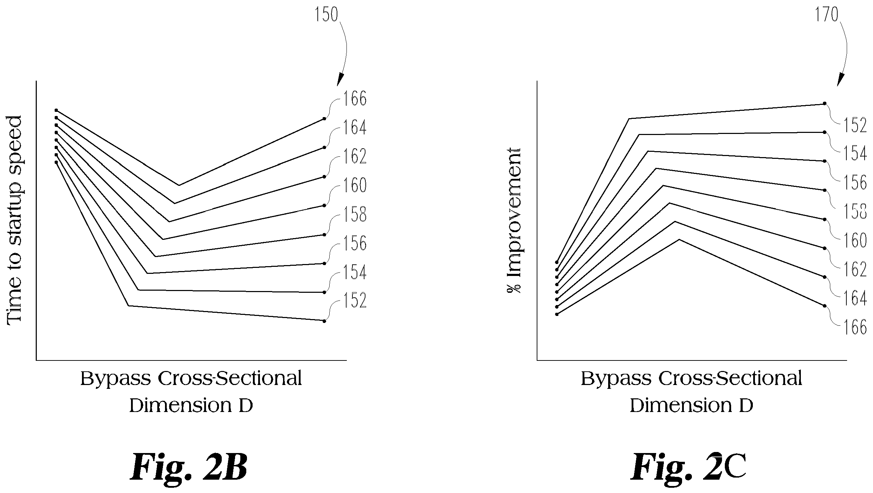

Referring to Fig. 2B, a graph is shown that includes a representative scatterplot 150 for time to an engine startup speed (y-axis) for bypass flow paths 112 of various cross-sectional dimensions D (x-axis) and pipe lengths L 152, 154, 156, 158, 160, 162, 164, 166. In Fig. 2C, a graph is shown that includes a representative scatterplot 170 for percentage improvement in a baseline startup time (for example, with no bypass flow path 112) to an engine startup speed (y-axis) for bypass flow paths 112 of various cross-sectional dimensions D (x-axis) and pipe lengths L 152, 154, 156, 158, 160, 162, 164, 166. The length L and cross-sectional dimension D of the conduit 130 can be selected using such scatterplots in order to provide the desired performance within the available space.

The system 100 includes controller 140 structured to perform certain operations to control the intake throttle 122, the bypass valve 126, and a fuel injector 134. Fuel injector 134 is operable to provide a desired fuel amount from a fuel source into the intake air to form the air-fuel mixture 104. Injector 134 can be any device that is operable to control fuel flow. In certain embodiments, the controller 140 forms a portion of a processing subsystem including one or more computing devices having memory, processing, and communication hardware. The controller may be a single device or a distributed device, and the functions of the controller may be performed by hardware and/or by a computer executing instructions stored in non-transient memory on one or more computer readable media.

In certain embodiments, the controller 140 includes one or more circuits structured to functionally execute the operations of the controller. The description herein including circuits emphasizes the structural independence of the aspects of the controller 140, and illustrates one grouping of operations and responsibilities of the controller 140. Other groupings that execute similar overall operations are understood within the scope of the present application. Circuits may be implemented in hardware and/or by a computer executing instructions stored in non-transient memory on one or more computer readable media, and circuits may be distributed across various hardware or computer based components.

Example and non-limiting implementation elements include sensors providing any value determined herein, sensors providing any value that is a precursor to a value determined herein, datalink and/or network hardware including communication chips, oscillating crystals, communication links, cables, twisted pair wiring, coaxial wiring, shielded wiring, transmitters, receivers, and/or transceivers, logic circuits, hard-wired logic circuits, reconfigurable logic circuits in a particular non-transient state configured according to the module specification, any actuator including at least an electrical, hydraulic, or pneumatic actuator, a solenoid, an op-amp, analog control elements (springs, filters, integrators, adders, dividers, gain elements), and/or digital control elements. In Fig. 1 there are shown sensors 142, 144, 146 connected to controller 140 to provide values indicative of air-fuel ratios at the corresponding intake throttle 122, mixer 108, and intake manifold 114 locations of system 100. The circuits and controllers herein, once the operations are described, are capable of numerous hardware and/or computer based implementations, many of the specific implementations of which involve mechanical steps for one of skill in the art having the benefit of the disclosures herein and the understanding of the operations of the circuits and the controllers provided by the present disclosure.

Certain operations described herein include operations to interpret or determine one or more parameters. Interpreting or determining, as utilized herein, includes an operation to have the value made available by any method known in the art, including at least receiving the value from a datalink or network communication, receiving an electronic signal (e.g. a voltage, frequency, current, or PWM signal) indicative of the value, receiving a computer generated parameter indicative of the value, reading the value from a memory location on a non-transient computer readable storage medium, receiving the value as a run-time parameter by any method known in the art (e.g. from an operator input), receiving a value by which the interpreted or determined parameter can be calculated, and/or by referencing a default value that is interpreted or determined to be the parameter value.

The schematic flow diagrams and related descriptions which follow provide illustrative embodiments of procedures for controlling intake throttle 122, bypass valve 126, and injector 134 in response to an engine startup condition and in response to subsequent engine operation. Certain operations illustrated may be implemented by a computer executing a computer program product on a non-transient computer readable storage medium, where the computer program product includes instructions causing the computer to execute one or more of the operations, or to issue commands to other devices to execute one or more of the operations.

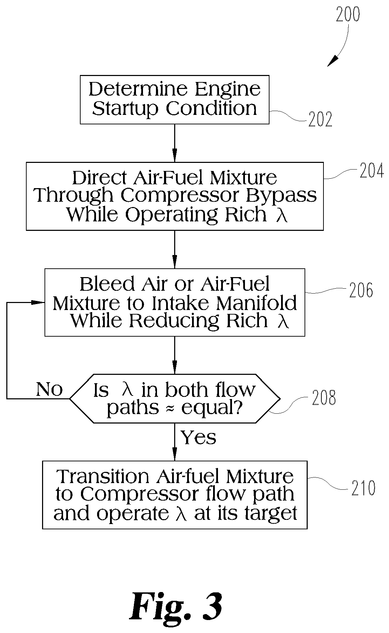

Fig. 3 is a flow diagram of one embodiment of a procedure 200 for controlling the flow of the air-fuel mixture 104 for engine startup and then to transition for subsequent engine operation. Procedure 200 includes an operation 202 to determine an engine startup condition in response to one or more inputs. The engine startup can be initiated, for example, automatically by controller 140 in response to one or more inputs, and/or manually by an operator input.

In response to the engine startup condition, procedure 200 includes an operation 204 to direct the air-fuel mixture 104 through the compressor bypass flow path 112 while operating the fuel injector 134 to provide a rich air-fuel ratio (λ) condition. For example, the compressor bypass valve 126 can be moved to an open position (if necessary) with a bypass valve actuator command from controller 140 to bypass valve actuator 128. The intake throttle 122 is moved to a closed position to provide a small opening at the beginning of the engine startup in response to an intake throttle actuator command from controller 140 to intake throttle actuator 124. Therefore, the uncompressed air-fuel mixture 104 travels a much shorter route to intake manifold 114 through bypass flow path 112 and provides the air-fuel mixture 104 to the nearest cylinders 116 to facilitate a more rapid engine startup than can be achieved through the compressor flow path 110.

The rich air-fuel mixture 104 may compensate for the residual air pocket in the intake manifold 114 such that the actual air-fuel ratio of the mixture arriving at the intake manifold 114 is close to a predefined target. The rich air-fuel mixture 104 may also reduce transport delay of the air-fuel mixture 104 from the mixer 108 to the intake manifold 114 for both flow paths 110, 112. It should be understood, however, that a rich air-fuel mixture 104 is just one possible solution.

Procedure 200 continues at operation 206 to bleed air or air-fuel mixture 104 from intake throttle 122 to intake manifold 114 while reducing the air-fuel ratio from its initial rich λ condition. Controller 140 can provide an intake throttle actuator command to intake throttle actuator 124 to partially open intake throttle 122 from its closed position. This allows the air-fuel ratio λ in compressor flow path 110 to gradually increase to correspond to, or be within a predetermined range of, the air-fuel ratio λ in bypass flow path 112 such that stable combustion in cylinders 116 is provided during the change in flow paths for transport of the air-fuel mixture 104.

Procedure 200 continues at conditional 208 to determine if the air-fuel ratio λ in the flow paths 110, 112 is approximately equal, or within a predetermined range of one another, so that stable combustion can be achieved by changing flow paths. If conditional 208 is NO, procedure 200 returns to operation 206. If conditional 208 is YES, procedure 200 continues at operation 210 to transition the air-fuel mixture 104 from bypass flow path (112) to compressor flow path 110 and operate the air-fuel mixture λ at its target. Transitioning the air-fuel mixture 104 to compressor flow path 110 can include closing the bypass valve 126 with a bypass valve command to bypass valve actuator 128. Fueling is then provided by injector 134 to operate engine 102 at stoichiometric or as needed for combustion by engine 102.

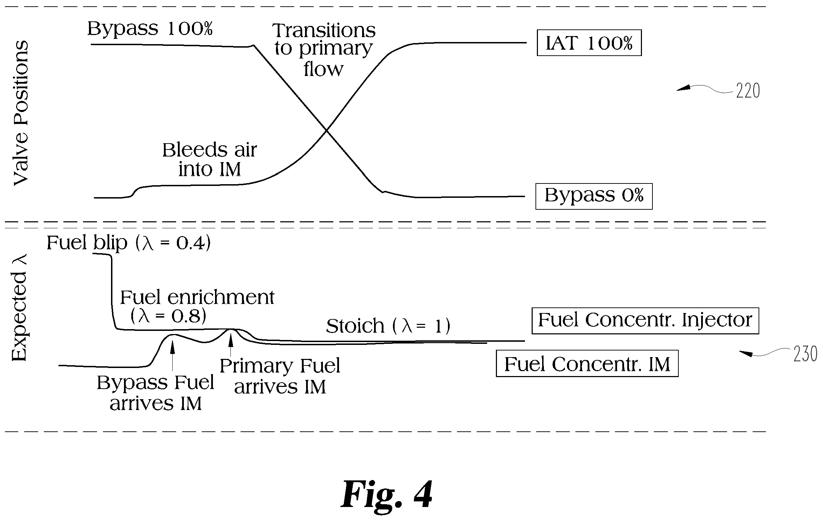

Fig. 4 provides a graphical illustration of one possible implementation of procedure 200. As shown in graph 220, which shows intake throttle and bypass valve positions over time during the engine startup, the bypass valve 126 transitions from a fully open position (100%) at initial startup to a fully closed position (0%) when startup is complete. The intake throttle 122 transitions from a closed position at initial startup, to a small increase in opening to bleed air into the intake manifold 114 immediately after startup is initiated, and then to a fully open position (100%) once the engine 102 is started.

Graph 230 of Fig. 4 shows the expected air-fuel ratio λ over time at the injector 134 and at the intake manifold 114. Initially the air-fuel ratio λ is rich, such as at a λ=0.4, when the engine startup is initiated and the air-fuel mixture is directed through bypass flow path 112 to intake manifold 114. The fuel enrichment continues during startup but in a less rich condition, such as at a λ=0.8, as the compressed air-fuel mixture 104 is bled through the compressor flow path 110 until the air-fuel mixture 104 from the compressor flow path 110 also reaches intake manifold 114. When the air-fuel ratios from both flow paths 110, 112 are substantially equal or within a predetermined threshold of one another at the intake manifold 114, then bypass valve 126 is closed and fueling continues through compressor flow path 110 at stoichiometric λ=1 or as needed for combustion through an open intake throttle 122. It should be understood that the implementation shown in Fig. 4 is exemplary, and other implementations are also contemplated.

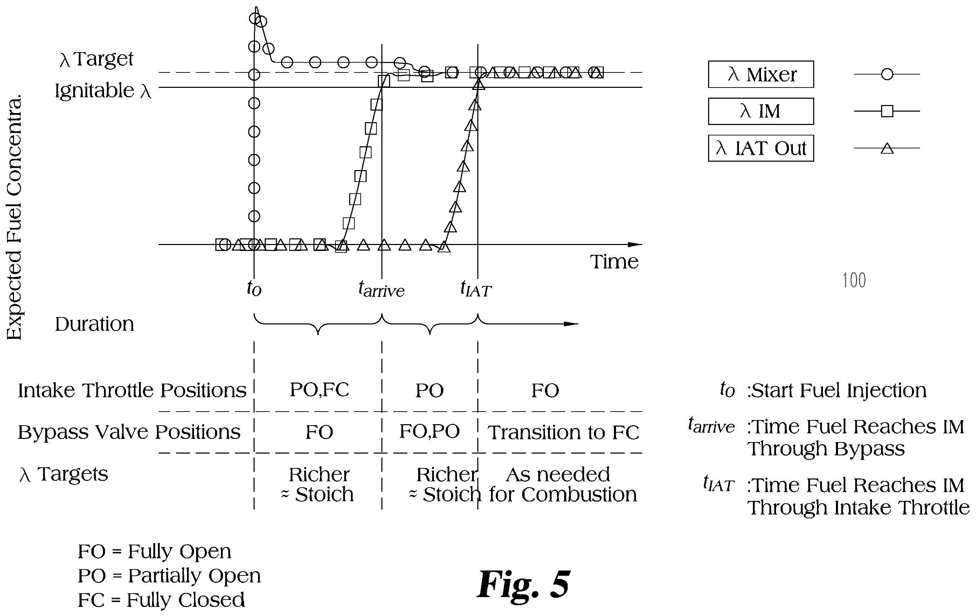

Fig. 5 provides examples of a range of control strategies that can be implemented using system 100 for engine startup. For any control strategy or procedure, the fuel transport time is reduced using the bypass flow path 110 for initial fuel transport to the intake manifold 114, while maintaining the air-fuel ratio λ around target values to minimize misfire possibilities. Fig. 5 shows the expected air-fuel ratio over a time period that include time to at the start of fuel injection, time tₐᵣᵣᵢᵥₑ when the fuel reaches the intake manifold 114 through bypass flow path 112, and time t_{IAT} for the fuel to reach the intake throttle 122.

Fig. 5 provide possible λ values at the mixer 108, intake manifold 114, and outlet of intake throttle 122 over the time periods t₀, tₐᵣᵣᵢᵥₑ, and t_{IAT}. Also shown are possible intake throttle and bypass valve positions over these time periods t₀, tₐᵣᵣᵢᵥₑ, and t_{IAT}. For example, intake throttle 122 can be initially positioned at a fully or partially closed condition from to to tₐᵣᵣᵢᵥₑ, and partially open from tₐᵣᵣᵢᵥₑ to t_{IAT}, and then fully open after t_{IAT}. Bypass valve 126 can be initially positioned at a fully open condition from to to tₐᵣᵣᵢᵥₑ, and fully or partially open from tₐᵣᵣᵢᵥₑ to t_{IAT}, and then transition to fully closed after t_{IAT}. The air-fuel ratio target can be richer or approximately stoichiometric from to to tₐᵣᵣᵢᵥₑ and from tₐᵣᵣᵢᵥₑ to t_{IAT}, and then transition as needed for combustion of engine 102 after t_{IAT}. It should be understood that the control strategies shown in Fig. 5 are exemplary, and other control strategies are also contemplated.

As is evident from the figures and text presented above, a variety of aspects according to the present disclosure are contemplated. According to one aspect, a method includes starting an internal combustion engine including an intake system and an air-fuel mixer connected to an intake manifold with first and second flow paths; while starting the internal combustion engine, directing an air-fuel mixture from the air-fuel mixer directly to the intake manifold through the second flow path to bypass a compressor and an intake throttle in the first flow path; and transitioning the providing of the air-fuel mixture to the intake manifold from the second flow path to the first flow path after the engine is started.

In one embodiment, the second flow path includes a bypass with the controllable bypass valve connecting the air-fuel mixer to the intake manifold. In one embodiment, starting the internal combustion engine includes transitioning the providing of the air-fuel mixture to the first flow path by opening the intake throttle and closing the bypass valve.

In one embodiment, starting the internal combustion engine includes opening the intake throttle and closing the bypass valve in response to an air-fuel ratio associated with the first flow path being within a predetermined range of an air-fuel ratio associated with the second flow path. In one embodiment, opening the intake throttle includes fully opening the intake throttle and closing the bypass valve includes fully closing the bypass valve.

In one embodiment, providing the air-fuel mixture to the first flow path includes partially opening the intake throttle while the bypass valve is fully open to bleed air or the air-fuel mixture into the intake manifold through the intake throttle. In one embodiment, starting the internal combustion engine includes injecting an initial fuel amount to provide a first air-fuel ratio at the mixer and injecting a second fuel amount at the mixer to provide a reduced, second air-fuel ratio at the mixer after injecting the initial fuel amount.

In one embodiment, each of the first and second air-fuel ratios are less than a stoichiometric air-fuel ratio. In one embodiment, the method includes injecting a stoichiometric fuel amount at the mixer in response to an air-fuel ratio associated with the first flow path corresponding to an air-fuel ratio associated with the second flow path.

According to another aspect, an apparatus includes an electronic controller configured to determine a bypass valve command that controls a bypass valve actuator to position a bypass valve in a compressor bypass flow path of an internal combustion engine. The electronic controller is further configured to determine an intake throttle command that controls an intake throttle actuator to position an intake throttle in a compressor flow path of the internal combustion engine that includes a compressor. In response to an engine startup condition, the compressor bypass valve actuator is operable to position the compressor bypass valve in response to the compressor bypass valve command, and the intake throttle actuator is operable to position the intake throttle in response to the intake throttle command, to direct an air-fuel mixture from an air-fuel mixer directly to the intake manifold through the compressor bypass flow path while closing the compressor flow path.

In one embodiment, the compressor flow path includes a charge air cooler. In one embodiment, the electronic controller is configured to transition the air-fuel mixture from the compressor bypass flow path to the compressor flow path by opening the intake throttle with the intake throttle actuator in response to the intake throttle command and closing the bypass valve with the compressor bypass valve actuator in response to the bypass valve command.

In one embodiment, the electronic controller is configured to open the intake throttle and close the bypass valve in response to an air-fuel ratio associated with the compressor flow path being within a predetermined range of an air-fuel ratio associated with the compressor bypass flow path.

In one embodiment, the electronic controller is configured to transition the air-fuel mixture from the compressor bypass flow path to the compressor flow path by providing an intake throttle command to the intake throttle actuator to partially open the intake throttle while the bypass valve is fully open to bleed air into an intake manifold of the internal combustion engine.

In one embodiment, the electronic controller is configured to control an injector to inject an initial fuel amount to provide a first air-fuel ratio at the mixer and inject a second fuel amount at the mixer to provide a reduced, second air-fuel ratio at the mixer after injecting the initial fuel amount.

In one embodiment, each of the first and second air-fuel ratios are less than a stoichiometric air-fuel ratio. In one embodiment, the electronic controller is configured to inject a stoichiometric fuel amount at the mixer in response to an air-fuel ratio associated with the compressor flow path being within a predetermined range of an air-fuel ratio associated with the compressor bypass flow path.

According to another aspect, the apparatus includes the internal combustion engine including an intake system with the air-fuel mixer. The air fuel mixer is connected to the intake manifold of the internal combustion engine by the compressor flow path that includes the compressor and the intake throttle. The intake system further includes the compressor bypass flow path that includes the bypass valve directly connected to the air-fuel mixer and connected to the intake manifold with a conduit. The compressor bypass flow path bypasses the compressor and the intake throttle.

In one embodiment, the apparatus includes a charge air cooler in the compressor flow path and the compressor bypass flow path bypasses the charge air cooler.

In one embodiment, the electronic controller is configured to transition the air-fuel mixture from the compressor bypass flow path to the compressor flow path by opening the intake throttle and closing the bypass valve.

## Claims

1. A method (200), comprising:
starting (202) an internal combustion engine (102) including an intake system (106) and an air-fuel mixer (108) connected to an intake manifold (114) with first and second flow paths (110, 112);
while starting the internal combustion engine (102), directing (204) an air-fuel mixture from the air-fuel mixer (108) through a controllable bypass valve (126) that is connected to the air-fuel mixer (108) to the intake manifold (114) through the second flow path (112) to bypass a compressor (118) and an intake throttle (122) in the first flow path, and positioning the intake throttle (122) in a closed position; and
transitioning (210) the providing of the air-fuel mixture to the intake manifold (114) from the second flow path (112) to the first flow path (110) after the engine (102) is started,
**characterized in that**
the controllable bypass valve (126) is directly connected to the air-fuel mixer (108).

2. The method (200) of claim 1, wherein the second flow path (112) includes a bypass with the controllable bypass valve (126), the controllable bypass valve (126) including a flanged housing (132) directly connected to the air-fuel mixer (108), the bypass including a conduit (130) connected to the flanged housing (132) opposite the air-fuel mixer (108), the conduit (130) connecting the air-fuel mixer (108) to the intake manifold (114) and starting (202) the internal combustion engine (102) includes providing the air-fuel mixture to the first flow path (110) by opening the intake throttle (122) and closing the controllable bypass valve (126).

3. The method of claim 2, wherein starting (202) the internal combustion engine (102) includes opening the intake throttle (122) and closing the controllable bypass valve (126) in response to an air-fuel ratio associated with the first flow path (110) being within a predetermined range of an air-fuel ratio associated with the second flow path (112), and
wherein opening the intake throttle (122) includes fully opening the intake throttle (122) and closing the controllable bypass valve (126) includes fully closing the controllable bypass valve (126).

4. The method (200) of claim 2, wherein providing the air-fuel mixture to the first flow path (110) includes partially opening the intake throttle (122) while the controllable bypass valve (126) is fully open to bleed air or the air-fuel mixture into the intake manifold (114) through the intake throttle (122).

5. The method (200) of claim 2, wherein starting (202) the internal combustion engine (102) includes injecting an initial fuel amount to provide a first air-fuel ratio at the air-fuel mixer (108) and injecting a second fuel amount at the air-fuel mixer (108) to provide a reduced, second air-fuel ratio at the air-fuel mixer (108) after injecting the initial fuel amount, and
wherein each of the first and second air-fuel ratios are less than a stoichiometric air-fuel ratio.

6. The method (200) of claim 5, further comprising injecting a stoichiometric fuel amount at the air-fuel mixer (108) in response to an air-fuel ratio associated with the first flow path (110) corresponding to an air-fuel ratio associated with the second flow path (112).

7. An apparatus, comprising:
an electronic controller (140) configured to determine a bypass valve command that controls a bypass valve actuator (128) to position a controllable bypass valve (126) in a compressor bypass flow path (112) of an internal combustion engine (102), wherein the electronic controller (140) is further configured to determine an intake throttle command that controls an intake throttle actuator (124) to position an intake throttle (122) in a compressor flow path (110) of the internal combustion engine (102) that includes a compressor (118); and
wherein, in response to an engine startup condition, the bypass valve actuator (128) is operable to position the controllable bypass valve (126) in response to the compressor bypass valve command, and the intake throttle actuator (124) is operable to close the intake throttle (122) in response to the intake throttle command, to direct an air-fuel mixture from an air-fuel mixer (108) through the controllable bypass valve (126) that is connected to the air-fuel mixer (108) to an intake manifold (114) of the internal combustion engine (102) through the compressor bypass flow path (112) while closing the compressor flow path (110) to bypass the compressor (118) and the intake throttle (122) in the compressor flow path (110),
**characterized in that**
the controllable bypass valve (126) is directly connected to the air-fuel mixer (108).

8. The apparatus of claim 7, wherein the compressor flow path (110) includes a charge air cooler (120).

9. The apparatus of claim 7, wherein the electronic controller (140) is configured to transition the air-fuel mixture from the compressor bypass flow path (112) to the compressor flow path (110) by opening the intake throttle (122) with the intake throttle actuator (124) in response to the intake throttle command and closing the controllable
bypass valve (126) with the compressor bypass valve actuator (128) in response to the bypass valve command.

10. The apparatus of claim 9, wherein the electronic controller (140) is configured to open the intake throttle (122) and close the controllable bypass valve (126) in response to an air-fuel ratio associated with the compressor flow path (110) being within a predetermined range of an air-fuel ratio associated with the compressor bypass flow path (112).

11. The apparatus of claim 9, wherein the electronic controller (140) is configured to transition the air-fuel mixture from the compressor bypass flow path (112) to the compressor flow path (110) by providing an intake throttle command to the intake throttle actuator (124) to partially open the intake throttle (122) while the controllable
bypass valve (126) is fully open to bleed air into the intake manifold (114) of the internal combustion engine (102).

12. The apparatus of claim 9, wherein the electronic controller (140) is configured to control an injector (134) to inject an initial fuel amount to provide a first air-fuel ratio at the air-fuel mixer (108) and inject a second fuel amount at the air-fuel mixer (108) to provide a reduced, second air-fuel ratio at the air-fuel mixer (108) after injecting the initial fuel amount, and
wherein each of the first and second air-fuel ratios are less than a stoichiometric air-fuel ratio.

13. The apparatus of claim 12, wherein the electronic controller (140) is configured to inject a stoichiometric fuel amount at the air-fuel mixer (108) in response to an air-fuel ratio associated with the compressor flow path (110) being within a predetermined range of an air-fuel ratio associated with the compressor bypass flow path (112).

14. The apparatus of claim 7, wherein: the internal combustion engine (102) includes an intake system (106) with the air-fuel mixer (108), the air fuel mixer (108) connected to the intake manifold (114) of the internal combustion engine (102) by the compressor flow path (110) that includes the compressor (118) and the intake throttle (122), the intake system (106) further including the compressor bypass flow path (112) that includes the controllable bypass valve (126) directly connected to the air-fuel mixer (118) and connected to the intake manifold (114) with a conduit (130).

15. The apparatus of claim 14, further comprising a charge air cooler (120) in the compressor flow path (110) and the compressor bypass flow path (112) bypasses the charge air cooler (120).

16. The apparatus of claim 14, wherein the electronic controller (140) is configured to transition the air-fuel mixture from the compressor bypass flow path (112) to the compressor flow path (110) by opening the intake throttle (122) and closing the controllable bypass valve (126).

## Patentansprüche

1. Verfahren (200), umfassend:
Starten (202) eines Verbrennungsmotors (102), der ein Ansaugsystem (106) und einen Luft-Kraftstoff-Mischer (108), der mit einem Ansaugkrümmer (114) mit erstem und zweitem Strömungsweg (110, 112) verbunden ist, einschließt;
während des Startens des Verbrennungsmotors (102) Leiten (204) eines Luft-Kraftstoff-Gemisches vom Luft-Kraftstoff-Mischer (108) durch ein steuerbares Umgehungsventil (126), das mit dem Luft-Kraftstoff-Mischer (108) verbunden ist, durch den zweiten Strömungsweg (112) zum Ansaugkrümmer (114), um einen Kompressor (118) und eine Ansaugdrosselklappe (122) im ersten Strömungsweg zu umgehen, und Positionieren der Ansaugdrosselklappe (122) in einer geschlossenen Position; und
Überführen (210) der Zufuhr des Luft-Kraftstoff-Gemisches zum Ansaugkrümmer (114) vom zweiten Strömungsweg (112) zum ersten Strömungsweg (110), nachdem der Motor (102) gestartet ist,
**dadurch gekennzeichnet, dass**
das steuerbare Umgehungsventil (126) direkt mit dem Luft-Kraftstoff-Mischer (108) verbunden ist.

2. Verfahren (200) nach Anspruch 1, wobei der zweite Strömungsweg (112) eine Umgehung mit dem steuerbaren Umgehungsventil (126) einschließt, wobei das steuerbare Umgehungsventil (126) ein Flanschgehäuse (132) einschließt, das direkt mit dem Luft-Kraftstoff-Mischer (108) verbunden ist, wobei die Umgehung eine Leitung (130) einschließt, die gegenüber dem Luft-Kraftstoff-Mischer (108) mit dem Flanschgehäuse (132) verbunden ist, wobei die Leitung (130) den Luft-Kraftstoff-Mischer (108) mit dem Ansaugkrümmer (114) verbindet, und das Starten (202) des Verbrennungsmotors (102) das Zuführen des Luft-Kraftstoff-Gemisches zum ersten Strömungsweg (110) durch Öffnen der Ansaugdrosselklappe (122) und Schließen des steuerbaren Umgehungsventils (126) einschließt.

3. Verfahren nach Anspruch 2, wobei das Starten (202) des Verbrennungsmotors (102) das Öffnen der Ansaugdrosselklappe (122) und das Schließen des steuerbaren Umgehungsventils (126) als Reaktion darauf einschließt, dass sich ein mit dem ersten Strömungsweg (110) verknüpftes Luft-Kraftstoff-Verhältnis innerhalb eines vorbestimmten Bereichs eines mit dem zweiten Strömungsweg (112) verknüpften Luft-Kraftstoff-Verhältnisses befindet, und
wobei das Öffnen der Ansaugdrosselklappe (122) das vollständige Öffnen der Ansaugdrosselklappe (122) einschließt und das Schließen des steuerbaren Umgehungsventils (126) das vollständige Schließen des steuerbaren Umgehungsventils (126) einschließt.

4. Verfahren (200) nach Anspruch 2, wobei das Zuführen des Luft-Kraftstoff-Gemisches zum ersten Strömungsweg (110) das teilweise Öffnen der Ansaugdrosselklappe (122) einschließt, während das steuerbare Umgehungsventil (126) vollständig geöffnet wird, um Luft oder das Luft-Kraftstoff-Gemisch durch die Ansaugdrosselklappe (122) in den Ansaugkrümmer (114) abzulassen.

5. Verfahren (200) nach Anspruch 2, wobei das Starten (202) des Verbrennungsmotors (102) das Einspritzen einer anfänglichen Kraftstoffmenge, um ein erstes Luft-Kraftstoff-Verhältnis am Luft-Kraftstoff-Mischer (108) zuzuführen, und das Einspritzen einer zweiten Kraftstoffmenge am Luft-Kraftstoff-Mischer (108), um ein reduziertes, zweites Luft-Kraftstoff-Verhältnisses am Luft-Kraftstoff-Mischer (108) zuzuführen, nach dem Einspritzen der anfänglichen Kraftstoffmenge einschließt, und
wobei sowohl das erste als auch das zweite Luft-Kraftstoff-Verhältnis kleiner als ein stöchiometrisches Luft-Kraftstoff-Verhältnis sind.

6. Verfahren (200) nach Anspruch 5, weiter umfassend das Einspritzen einer stöchiometrischen Kraftstoffmenge am Luft-Kraftstoff-Mischer (108) als Reaktion darauf, dass ein Luft-Kraftstoff-Verhältnis, das mit dem ersten Strömungsweg (110) verknüpft ist, einem Luft-Kraftstoff-Verhältnis entspricht, das mit dem zweiten Strömungsweg (112) verknüpft ist.

7. Einrichtung, umfassend:
eine elektronische Steuereinheit (140), die so konfiguriert ist, dass sie einen Umgehungsventilbefehl bestimmt, der eine Umgehungsventil-Betätigungsvorrichtung (128) steuert, um ein steuerbares Umgehungsventil (126) in einem Kompressor-Umgehungsströmungsweg (112) eines Verbrennungsmotors (102) zu positionieren, wobei die elektronische Steuereinheit (140) weiter so konfiguriert ist, dass sie einen Ansaugdrosselklappenbefehl bestimmt, der eine Ansaugdrosselklappen-Betätigungsvorrichtung (124) steuert, um eine Ansaugdrosselklappe (122) in einem Kompressorströmungsweg (110) des Verbrennungsmotors (102), der einen Kompressor (118) einschließt, zu positionieren; und
wobei die Umgehungsventil-Betätigungsvorrichtung (128), als Reaktion auf einen Motorstartzustand, betätigbar ist, um das steuerbare Umgehungsventil (126) als Reaktion auf den Kompressor-Umgehungsventilbefehl zu positionieren, und die Ansaugdrosselklappen-Betätigungsvorrichtung (124) betätigbar ist, um die Ansaugdrosselklappe (122) als Reaktion auf den Ansaugdrosselklappenbefehl zu schließen, um ein Luft-Kraftstoff-Gemisch von einem Luft-Kraftstoff-Mischer (108) durch das steuerbare Umgehungsventil (126), das mit dem Luft-Kraftstoff-Mischer (108) verbunden ist, durch den Kompressor-Umgehungsströmungsweg (112) zu einem Ansaugkrümmer (114) des Verbrennungsmotors (102) zu leiten, während der Kompressorströmungsweg (110) geschlossen wird, um den Kompressor (118) und die Ansaugdrosselklappe (122) im Kompressorströmungsweg (110) zu umgehen,
**dadurch gekennzeichnet, dass**
das steuerbare Umgehungsventil (126) direkt mit dem Luft-Kraftstoff-Mischer (108) verbunden ist.

8. Einrichtung nach Anspruch 7, wobei der Kompressorströmungsweg (110) einen Ladeluftkühler (120) einschließt.

9. Einrichtung nach Anspruch 7, wobei die elektronische Steuereinheit (140) so konfiguriert ist, dass sie das Luft-Kraftstoff-Gemisch vom Kompressor-Umgehungsströmungsweg (112) zum Kompressorströmungsweg (110) überführt, indem sie die Ansaugdrosselklappe (122) mit der Ansaugdrosselklappen-Betätigungsvorrichtung (124) als Reaktion auf den Ansaugdrosselklappenbefehl öffnet und das steuerbare Umgehungsventil (126) mit der Kompressorumgehungsventil-Betätigungsvorrichtung (128) als Reaktion auf den Umgehungsventilbefehl schließt.

10. Einrichtung nach Anspruch 9, wobei die elektronische Steuereinheit (140) so konfiguriert ist, dass sie als Reaktion darauf, dass ein Luft-Kraftstoff-Verhältnis, das mit dem Kompressorströmungsweg (110) verknüpft ist, innerhalb eines vorbestimmten Bereichs eines Luft-Kraftstoff-Verhältnisses, das mit dem Kompressor-Umgehungsströmungsweg (112) verknüpft ist, liegt, die Ansaugdrosselklappe (122) öffnet und das steuerbare Umgehungsventil (126) schließt.

11. Einrichtung nach Anspruch 9, wobei die elektronische Steuereinheit (140) so konfiguriert ist, dass sie das Luft-Kraftstoff-Gemisch vom Kompressor-Umgehungsströmungsweg (112) zum Kompressorströmungsweg (110) überführt, indem sie der Ansaugdrosselklappen-Betätigungsvorrichtung (124) einen Ansaugdrosselklappenbefehl zuführt, um die Ansaugdrosselklappe (122) teilweise zu öffnen, während das steuerbare Umgehungsventil (126) vollständig geöffnet wird, um Luft in den Ansaugkrümmer (114) des Verbrennungsmotors (102) abzulassen.

12. Einrichtung nach Anspruch 9, wobei die elektronische Steuereinheit (140) so konfiguriert ist, dass sie einen Injektor (134) steuert, um eine anfängliche Kraftstoffmenge einzuspritzen, um ein erstes Luft-Kraftstoff-Verhältnis am Luft-Kraftstoff-Mischer (108) zu zuzuführen, und um nach dem Einspritzen der anfänglichen Kraftstoffmenge eine zweite Kraftstoffmenge am Luft-Kraftstoff-Mischer (108) einzuspritzen, um ein reduziertes, zweites Luft-Kraftstoff-Verhältnis am Luft-Kraftstoff-Mischer (108) zuzuführen, und
wobei sowohl das erste als auch das zweite Luft-Kraftstoff-Verhältnis kleiner als ein stöchiometrisches Luft-Kraftstoff-Verhältnis sind.

13. Einrichtung nach Anspruch 12, wobei die elektronische Steuereinheit (140) so konfiguriert ist, dass sie eine stöchiometrische Kraftstoffmenge in den Luft-Kraftstoff-Mischer (108) einspritzt, wenn das Luft-Kraftstoff-Verhältnis im Kompressorströmungsweg (110) innerhalb eines vorbestimmten Bereichs des Luft-Kraftstoff-Verhältnisses im Kompressor-Umgehungsströmungsweg (112) liegt.

14. Einrichtung nach Anspruch 7, wobei:
der Verbrennungsmotor (102) ein Ansaugsystem (106) mit dem Luft-Kraftstoff-Mischer (108) einschließt, wobei der Luft-Kraftstoff-Mischer (108) über den Kompressorströmungsweg (110), der den Kompressor (118) und die Ansaugdrosselklappe (122) einschließt, mit dem Ansaugkrümmer (114) des Verbrennungsmotors (102) verbunden ist, wobei das Ansaugsystem (106) weiter den Kompressor-Umgehungsströmungsweg (112) einschließt, der das steuerbare Umgehungsventil (126) einschließt, das direkt mit dem Luft-Kraftstoff-Mischer (118) verbunden ist und mit einer Leitung (130) mit dem Ansaugkrümmer (114) verbunden ist.

15. Einrichtung nach Anspruch 14, weiter umfassend einen Ladeluftkühler (120) im Kompressorströmungsweg (110), und wobei der Kompressor-Umgehungsströmungsweg (112) den Ladeluftkühler (120) umgeht.

16. Einrichtung nach Anspruch 14, wobei die elektronische Steuereinheit (140) so konfiguriert ist, dass sie das Luft-Kraftstoff-Gemisch vom Kompressor-Umgehungsströmungsweg (112) zum Kompressorströmungsweg (110) überführt, indem sie die Ansaugdrosselklappe (122) öffnet und das steuerbare Umgehungsventil (126) schließt.

## Revendications

1. Procédé (200), comprenant :
le démarrage (202) d'un moteur à combustion interne (102) incluant un système d'admission (106) et un mélangeur air-carburant (108) relié à un collecteur d'admission (114) avec des premier et second circuits d'écoulement (110, 112) ;
pendant le démarrage du moteur à combustion interne (102), l'orientation (204) d'un mélange air-carburant provenant du mélangeur air-carburant (108) à travers une vanne de dérivation pouvant être commandée (126) reliée au mélangeur air-carburant (108) vers le collecteur d'admission (114) à travers le second circuit d'écoulement (112) pour contourner un compresseur (118) et un papillon d'admission (122) dans le premier circuit d'écoulement, et le positionnement du papillon d'admission (122) en position fermée ; et
le passage (210) de l'acheminement du mélange air-carburant vers le collecteur d'admission (114) du second circuit d'écoulement (112) au premier circuit d'écoulement (110) après le démarrage du moteur (102),
**caractérisé en ce que**
la vanne de dérivation pouvant être commandée (126) est directement reliée au mélangeur air-carburant (108).

2. Procédé (200) selon la revendication 1, dans lequel le second circuit d'écoulement (112) inclut une dérivation avec la vanne de dérivation pouvant être commandée (126), la vanne de dérivation pouvant être commandée (126) incluant un boîtier à bride (132) directement relié au mélangeur air-carburant (108), la dérivation incluant un conduit (130) relié au boîtier à bride (132) opposé au mélangeur air-carburant (108), le conduit (130) reliant le mélangeur air-carburant (108) au collecteur d'admission (114) et le démarrage (202) du moteur à combustion interne (102) inclut l'acheminement du mélange air-carburant vers le premier circuit d'écoulement (110) en ouvrant le papillon d'admission (122) et en fermant la vanne de dérivation pouvant être commandée (126).

3. Procédé selon la revendication 2, dans lequel le démarrage (202) du moteur à combustion interne (102) inclut l'ouverture du papillon d'admission (122) et la fermeture de la vanne de dérivation pouvant être commandée (126) en réponse au fait qu'un rapport air-carburant associé au premier circuit d'écoulement (110) se trouve dans une plage prédéterminée d'un rapport air-carburant associé au second circuit d'écoulement (112), et
dans lequel l'ouverture du papillon d'admission (122) inclut l'ouverture complète du papillon d'admission (122) et la fermeture de la vanne de dérivation pouvant être commandée (126) inclut la fermeture complète de la vanne de dérivation pouvant être commandée (126).

4. Procédé (200) selon la revendication 2, dans lequel l'acheminement du mélange air-carburant vers le premier circuit d'écoulement (110) inclut l'ouverture partielle du papillon d'admission (122) tandis que la vanne de dérivation pouvant être commandée (126) est entièrement ouverte pour purger l'air ou le mélange air-carburant dans le collecteur d'admission (114) à travers le papillon d'admission (122).

5. Procédé (200) selon la revendication 2, dans lequel le démarrage (202) du moteur à combustion interne (102) inclut l'injection d'une quantité initiale de carburant pour fournir un premier rapport air-carburant au niveau du mélangeur air-carburant (108) et l'injection d'une seconde quantité de carburant au niveau du mélangeur air-carburant (108) pour fournir un second rapport air-carburant réduit au niveau du mélangeur air-carburant (108) après l'injection de la quantité initiale de carburant, et
dans lequel chacun des premier et second rapports air-carburant est inférieur à un rapport air-carburant stœchiométrique.

6. Procédé (200) selon la revendication 5, comprenant en outre l'injection d'une quantité stœchiométrique de carburant au niveau du mélangeur air-carburant (108) en réponse au fait qu'un rapport air-carburant associé au premier circuit d'écoulement (110) correspond à un rapport air-carburant associé au second circuit d'écoulement (112).

7. Appareil comprenant :
un dispositif de commande électronique (140) configuré pour déterminer une commande de vanne de dérivation qui commande un actionneur de vanne de dérivation (128) afin de positionner une vanne de dérivation pouvant être commandée (126) dans un circuit d'écoulement de dérivation de compresseur (112) d'un moteur à combustion interne (102), dans lequel le dispositif de commande électronique (140) est en outre configuré pour déterminer une commande de papillon d'admission qui commande un actionneur de papillon d'admission (124) afin de positionner un papillon d'admission (122) dans un circuit d'écoulement de compresseur (110) du moteur à combustion interne (102) qui inclut un compresseur (118) ; et
dans lequel, en réponse à une condition de démarrage du moteur, l'actionneur de vanne de dérivation (128) peut être actionné pour positionner la vanne de dérivation pouvant être commandée (126) en réponse à la commande de la vanne de dérivation de compresseur, et l'actionneur de papillon d'admission (124) peut être actionné pour fermer le papillon d'admission (122) en réponse à la commande du papillon d'admission afin d'orienter un mélange air-carburant provenant d'un mélangeur air-carburant (108) à travers la vanne de dérivation pouvant être commandée (126) qui est reliée au mélangeur air-carburant (108) vers un collecteur d'admission (114) du moteur à combustion interne (102) à travers le circuit d'écoulement de dérivation de compresseur (112) tout en fermant le circuit d'écoulement de compresseur (110) pour contourner le compresseur (118) et le papillon d'admission (122) dans le circuit d'écoulement de compresseur (110),
**caractérisé en ce que**
la vanne de dérivation pouvant être commandée (126) est directement reliée au mélangeur air-carburant (108).

8. Appareil selon la revendication 7, dans lequel le circuit d'écoulement de compresseur (110) inclut un refroidisseur d'air de suralimentation (120).

9. Appareil selon la revendication 7, dans lequel le dispositif de commande électronique (140) est configuré pour faire passer le mélange air-carburant du circuit d'écoulement de dérivation de compresseur (112) au circuit d'écoulement de compresseur (110) en ouvrant le papillon d'admission (122) avec l'actionneur de papillon d'admission (124) en réponse à la commande de papillon d'admission et en fermant la vanne de dérivation pouvant être commandée (126) avec l'actionneur de vanne de dérivation de compresseur (128) en réponse à la commande de vanne de dérivation.

10. Appareil selon la revendication 9, dans lequel le dispositif de commande électronique (140) est configuré pour ouvrir le papillon d'admission (122) et fermer la vanne de dérivation pouvant être commandée (126) en réponse au fait qu'un rapport air-carburant associé au circuit d'écoulement de compresseur (110) se trouve dans une plage prédéterminée d'un rapport air-carburant associé au circuit d'écoulement de dérivation de compresseur (112).

11. Appareil selon la revendication 9, dans lequel le dispositif de commande électronique (140) est configuré pour faire passer le mélange air-carburant du circuit d'écoulement de dérivation de compresseur (112) au circuit d'écoulement de compresseur (110) en fournissant une commande de papillon d'admission à l'actionneur de papillon d'admission (124) pour ouvrir partiellement le papillon d'admission (122) tandis que la vanne de dérivation pouvant être commandée (126) est entièrement ouverte pour purger l'air dans le collecteur d'admission (114) du moteur à combustion interne (102).

12. Appareil selon la revendication 9, dans lequel le dispositif de commande électronique (140) est configuré pour commander un injecteur (134) afin d'injecter une quantité initiale de carburant pour fournir un premier rapport air-carburant au niveau du mélangeur air-carburant (108) et d'injecter une seconde quantité de carburant au niveau du mélangeur air-carburant (108) afin de fournir un second rapport air-carburant réduit au niveau du mélangeur air-carburant (108) après l'injection de la quantité initiale de carburant, et
dans lequel chacun des premier et second rapports air-carburant est inférieur à un rapport air-carburant stœchiométrique.

13. Appareil selon la revendication 12, dans lequel le dispositif de commande électronique (140) est configuré pour injecter une quantité de carburant stœchiométrique au niveau du mélangeur air-carburant (108) en réponse au fait qu'un rapport air-carburant associé au circuit d'écoulement de compresseur (110) se trouve dans une plage prédéterminée d'un rapport air-carburant associé au circuit d'écoulement de dérivation de compresseur (112).

14. Appareil selon la revendication 7, dans lequel :
le moteur à combustion interne (102) inclut un système d'admission (106) avec le mélangeur air-carburant (108), le mélangeur air-carburant (108) étant relié au collecteur d'admission (114) du moteur à combustion interne (102) par le circuit d'écoulement de compresseur (110) qui inclut le compresseur (118) et le papillon d'admission (122), le système d'admission (106) incluant en outre le circuit d'écoulement de dérivation de compresseur (112) qui inclut la vanne de dérivation pouvant être commandée (126) directement reliée au mélangeur air-carburant (118) et reliée au collecteur d'admission (114) par un conduit (130).

15. Appareil selon la revendication 14, comprenant en outre un refroidisseur d'air de suralimentation (120) dans le circuit d'écoulement de compresseur (110) et le circuit d'écoulement de dérivation de compresseur (112) contourne le refroidisseur d'air de suralimentation (120).

16. Appareil selon la revendication 14, dans lequel le dispositif de commande électronique (140) est configuré pour faire passer le mélange air-carburant du circuit d'écoulement de dérivation de compresseur (112) au circuit d'écoulement de compresseur (110) en ouvrant le papillon d'admission (122) et en fermant la vanne de dérivation pouvant être commandée (126).
